# EUROPÄISCHE PATENTSCHRIFT

(11) **EP 3 452 739 B1**
(45) Veröffentlichungstag und Bekanntmachung des Hinweises auf die Patenterteilung: **08.01.2020**
(21) Anmeldenummer: 17727081.6
(22) Anmeldetag: 03.05.2017
(51) Int. Cl.: F16H 7/08

(54) **HYDRAULISCHE SPANNVORRICHTUNG FÜR EINEN KETTENTRIEB**
HYDRAULIC TENSIONING DEVICE FOR A CHAIN DRIVE
DISPOSITIF DE TENSION HYDRAULIQUE POUR UN ENTRAÎNEMENT PAR CHAÎNE

(30) Priorität: 04.05.2016 DE 102016207784
(43) Veröffentlichungstag der Anmeldung: 13.03.2019
(73) Patentinhaber: Schaeffler Technologies AG & Co. KG, 91074 Herzogenaurach (DE)
(72) Erfinder: FUHRMANN, Rainer, 91344 Waischenfeld (DE); ULLEIN, Thomas, 91074 Herzogenaurach (DE)
(86) Internationale Anmeldenummer: PCT/DE2017/100369
(87) Internationale Veröffentlichungsnummer: WO 2017/190736

(56) Entgegenhaltungen:
- EP-A1- 2 395 259
- DE-A1-102012 001 074
- DE-A1-102015 215 737
- US-A- 5 931 754

## Beschreibung

Die Erfindung betrifft eine hydraulische Spannvorrichtung für einen Kettentrieb mit einem Spannkolben, der in einer Aufnahme geführt ist und der an seiner Außenumfangsfläche Rastnuten aufweist, und mit einem Rastelement, das zwei ringförmige Abschnitte und zwei radiale Erweiterungen aufweist, wobei das Rastelement mithilfe der zwei ringförmigen Abschnitte mit einer der Rastnuten in Eingriff gebracht werden kann, sowie mit einem Klemmanschlag und einem Gleitanschlag, die axial voneinander beabstandet sind.

Derartige hydraulische Spannvorrichtungen sind aus der US 2003/ 0 139 235 A1 bekannt. Gezeigt ist ein Kettenspanner mit einem rohrförmigen Gehäuse mit einem Boden und einer Einkerbung an einem offenen Ende, mit einem Kolben, der eine Vielzahl von Einrastkerben am Außenumfang aufweist und in dem Innenumfang des Gehäuses installiert ist, mit einer Rückstellfeder, welche den Kolben mit einer nach außen drückenden Kraft beaufschlagt, mit einem Anschlagring, der zwischen dem Innenumfang des Gehäuses und dem Außenumfang des Kolbens installiert ist, mit einem Ringelement, das in einer Führungsnut in axialer Richtung gleitbar ist und mit einem Betätigungselement zur radialen Expansion des Ringelements, mit einem ersten Stopper, welcher die Rückwärtsbewegung des Anschlagrings relativ zum Gehäuse durch die Festlegung des Anschlagrings in der Führungsnut begrenzt und mit einem zweiten Stopper mit einem kleineren inneren Durchmesser als der äußere Durchmesser des Anschlagrings zur Begrenzung der Vorwärtsbewegung des Anschlagrings relativ zu dem Gehäuse, wobei der Anschlagring in der Führungsnut arretiert ist. Nachteilig ist das Erfordernis, den Innenumfang des Gehäuses aufwendig bearbeiten zu müssen, um den Anschlagring zwischen dem Innenumfang des Gehäuses und dem Außenumfang des Kolbens sowie zwischen dem ersten und dem zweiten Stopper installieren zu können.

Die EP 2 395 259 A1 zeigt eine hydraulische Spannvorrichtung für einen Kettentrieb mit einem Spannkolben, der in einer Aufnahme geführt ist und der an seiner Außenumfangsfläche Rastnuten aufweist, und mit einem Rastelement, das zwei ringförmige Abschnitte und zwei radiale Erweiterungen aufweist. Das Rastelement kann mithilfe der zwei ringförmigen Abschnitte mit einer der Rastnuten in Eingriff gebracht werden.

Die Spannvorrichtung offenbart weiterhin einen Klemmanschlag und einen Gleitanschlag, die axial voneinander beabstandet sind. Das Rastelement greift durch Gehäusefenster und sitzt in einer Rastnut gelagert auf dem Spannkolben.

Es ist daher Aufgabe der Erfindung, eine hydraulische Spannvorrichtung mit einem vereinfachten konstruktiven Aufbau bereitzustellen. Eine weitere Aufgabe besteht darin, ein Verfahren zur Montage einer hydraulischen Spannvorrichtung sowie ein Verfahren zum Zurücksetzen des Spannkolbens einer hydraulischen Spannvorrichtung vorzuschlagen.

Die Aufgaben werden gelöst durch eine hydraulische Spannvorrichtung mit den Merkmalen des Anspruchs 1 sowie durch Verfahren mit den Verfahrensschritten nach Anspruch 6 und Anspruch 7.

Die Aufnahme der hydraulischen Spannvorrichtung weist demnach zwei axiale Verlängerungen auf, die sich in axialer Richtung zwischen der Klemmanschlagebene und der Gleitanschlagebene erstrecken und die im Bereich der Gleitanschlagebene voneinander getrennt angeordnet sind, wobei die zwei axialen Verlängerungen der Aufnahme und der Spannkolben die zwei radialen Erweiterungen des Rastelements nicht einschließen; zugleich weist eine der zwei radialen Erweiterungen eine Einschnürung und eine Unterbrechung des Rastelements auf, wobei ein erstes Ende und ein zweites Ende des Rastelements die Unterbrechung einschließen und wobei in Umfangsrichtung der Abstand zwischen dem ersten Ende und dem zweiten Ende größer ist als zwischen Teilbereichen des Rastelements, die die Einschnürung bilden.

Demnach schließen jedenfalls zwei der zwei axialen Verlängerungen der Aufnahme und der Spannkolben zwei der zwei radialen Erweiterungen des Rastelements in radialer Richtung nicht ein, da die radialen Erweiterungen des Rastelements im Bereich der axialen Verlängerungen der Aufnahme angeordnet sind. Auf vorteilhafte Weise kann auf eine aufwendige Bearbeitung des Innenumfangs der Aufnahme verzichtet werden. Insbesondere muss keine umlaufende, am Innenumfang angeordnete Nut vorgesehen sein. Beispielsweise kann somit ermöglicht werden, auf eine spangebende Nachbearbeitung in dieser Hinsicht zu verzichten. Stattdessen können beispielsweise die Aufnahme und die zwei axialen Verlängerungen gießtechnisch gemeinsam gefertigt werden.

Die zwei axialen Verlängerungen weisen in einem axialen Abschnitt zwischen der Klemmanschlagebene und der Gleitanschlagebene in Umfangsrichtung beidseitig eine Verjüngung auf, wodurch in der Gleitanschlagebene der Gleitanschlag gebildet wird. Der Gleitanschlag befindet sich somit dort, wo die Verjüngung endet. Die zwei axialen Verlängerungen können demnach T-förmig gestaltet sein, wobei der Steg des T sich zwischen der Gleitanschlagebene und der Klemmanschlagebene erstreckt und das Dach des T die Gleitanschlagebene bildet, woraus, dem Steg zugewandt, der Gleitanschlag hervorgeht. Das Dach des T kann im Wesentlichen tangential zur Umfangsrichtung verlaufen. Alternative kann das Dach des T, einen Kreisabschnitt bildend, in Umfangsrichtung verlaufen, wobei die erste Alternative vorteilhaft hinsichtlich der gießtechnischen Herstellbarkeit ist.

Besondere Vorteile mit Blick auf die gießtechnische Fertigung der Aufnahme und der axialen Verlängerungen der Aufnahme können erreicht werden, wenn die Unterseite einer axialen Verlängerung (also die Seite, die dem Spannkolben zugewandt ist) mit einem bestimmten radialen Abstand von dem zylindrischen Hohlraum der Aufnahme entfernt angeordnet ist (bzw. einer gedachten Verlängerung der Innenmantelfläche des zylindrischen Hohlraums). Der Abstand soll größer als 1 mm sein und bevorzugt zwischen 2 mm bis 3 mm betragen. Auf diese Weise lässt sich die Aufnahme kostengünstig beispielsweise mithilfe eines Auf-Zu-Werkzeugs und eines Schieber herstellen.

Ein erstes Ende und ein zweites Ende des Rastelements schließen die Unterbrechung ein, wobei - zumindest in einem nicht vorgespannten Zustand des Rastelements - in Umfangsrichtung der Abstand zwischen dem ersten Ende und dem zweiten Ende größer ist als zwischen Teilbereichen des Rastelements, die die Einschnürung bilden. Die Montage der Spannvorrichtung kann demnach derart erfolgen, dass das Rastelement in einem axialen Bereich zwischen der Klemmanschlagebene und der Gleitanschlagebene in radiale Richtung über die erste der zwei axialen Verlängerungen geschoben wird und anschließend über den Spannkolben sowie die zweite der zwei axialen Verlängerungen.

In weiterer Ausgestaltung ist der Spannkolben in einer Aufnahme geführt und schließt gemeinsam mit der Aufnahme einen Hochdruckraum ein. Über ein als Nachfüllventil gestaltetes Rückschlagventil mit einem beispielsweise kugelförmigen oder plattenförmigen Rückschlagventilkörper gelangt unter Druck stehendendes Hydraulikmittel in den Hochdruckraum. Wird über den Steuertrieb, insbesondere Kettentrieb, eine Kraft auf den mittels einer Feder gegen die Aufnahme vorgespannten Spannkolben ausgeübt, wird der Spannkolben in die Aufnahme gedrängt; Schwingungen des Steuertriebs werden gedämpft, indem Hydraulikmittel über einen Leckagespalt abgeführt wird. Zum Abbau von Druckspitzen kann ein Überdruckventil im Hochdruckraum angeordnet sein.

Um eine ausreichende Spannung der Kette gewährleisten zu können, ist der Spannkolben in weiterer Ausgestaltung zum einen mittels einer Feder gegen die Aufnahme verspannt. Beispielsweise bei Motorstart können jedoch große Kräfte auf den Spannkolben wirken, so dass ein übermäßiges Einfahren des Spannkolbens nicht wirksam verhindert werden kann. Um ein übermäßiges Einfahren des Spannkolbens zu vermeiden, weist der Spannkolben an seiner Außenumfangsfläche zumindest entlang eines axialen Abschnitts Rastnuten auf. Die Rastnuten sind umlaufend entlang des Außenumfangs angeordnet und derart gestaltet, dass ein Ausfahren des Spannkolbens ermöglicht, ein Einfahren des Spannkolbens jedoch verhindert wird: Die Rastnuten weisen jeweils zwei Nutwände auf, die mithilfe des Rastelements einerseits mit dem Klemmanschlag und andererseits mit dem Gleitanschlag in Kontakt gebracht werden können. Die Nutwand, die bei einem Einfahren mit dem Klemmanschlag in Kontakt gebracht werden kann, verläuft steiler als die gegenüberliegende Nutwand, die mit dem Gleitanschlag in Kontakt gebracht werden kann. Ein übermäßiges Einfahren wird auf diese Weise wirksam unterbunden, weil das Rastelement formschlüssig zwischen Rastnut und Klemmanschlag anliegt. Bei einem Ausfahren des Spannkolbens kann das Rastelement mit dem Gleitanschlag in Kontakt gebracht werden, wodurch das Rastelement über die Nutwand in die nächste Rastnut gleitet bzw. zwangsweise geschoben werden kann. Der axiale Abstand zwischen dem Klemm- und dem Gleitanschlag bestimmt gemeinsam mit der Nutbreite den Rückhub des Spannkolbens.

Die zwei axialen Verlängerungen können in weiterer Ausgestaltung als sich in axialer Richtung erstreckende Stege gebildet sein und können endseitig, der Aufnahme zugewandt, den Gleitanschlag formen. Der Gleitanschlag kann beispielsweise derart gebildet sein, dass die zwei axialen Verlängerungen jeweils in Form eines T-Stücks geformt sind. Die zwei radialen Erweiterungen des Rastelements können somit beim Ausfahren des Spannkolbens mit dem Gleitanschlag in Kontakt gebracht werden, wobei der Gleitanschlag durch die hakenförmigen Erweiterungen des T-Stücks gebildet wird.

Der Klemmanschlag kann in weiterer Ausgestaltung durch Anformungen an einer Stirnseite der Aufnahme gebildet werden. Der Klemmanschlag kann im Verhältnis zur Ebene, die orthogonal zu einer die Längsachse der Aufnahme enthaltenden Ebene verläuft, geneigt angeordnet sein. Die Klemmanschlagebene ist somit die Ebene, die im Wesentlichen den Linienkontaktbereich zwischen Klemmanschlag und Rastelement enthält. Die Klemmanschlagebene kann somit ebenfalls orthogonal zur Ebene verlaufen, die die Längsachse der Aufnahme enthält. Der Klemmanschlag kann eine Fase sein, die entlang eines Teils des Umfangs der Öffnung der Aufnahme verläuft.

In weiterer Ausgestaltung können die zwei axialen Verlängerung und der Rastring in beliebiger Relation zur Aufnahme angeordnet sein. Beispielsweise kann bei Vorhandensein von genau zwei axialen Verlängerungen eine gedachte Verbindungslinie zwischen den genau zwei axialen Verlängerungen parallel oder senkrecht zu einer Ebene verlaufen, die der Ebene der Anlagefläche zwischen Aufnahme und Montageumgebung entspricht.

In weiterer Ausgestaltung umfasst die Aufnahme einen zylindrischen Hohlraum, wobei der Spannkolben mithilfe des zylindrischen Hohlraums geführt ist. Alternativumfasst die Aufnahme einen zylindrischen Hohlraum und eine in den zylindrischen Hohlraum eingesetzte Hülse, wobei der Spannkolben mithilfe der Hülse geführt ist. Besondere Kostenvorteile ergeben sich, wenn der Spannkolben direkt in einem zylindrischen Hohlraum der Aufnahme geführt ist. Die Aufnahme kann beispielsweise als Gehäuse aus Aluminium gestaltet sein und den zylindrischen Hohlraum zum Führen des Spannkolbens aufweisen. Alternativ kann der zylindrische Hohlraum eine Hülse, beispielsweise aus Stahl hergestellt, aufnehmen; in diesem Fall können die Hülse, das Rückschlagventil und weitere Komponenten vormontiert eingesetzt werden.

Das Rastelement kann beispielsweise elastisch dehnbar als Draht gestaltet sein; der Radius der ringförmigen Abschnitte kann somit vergrößert werden, wenn das Rastelement über eine der Nutwände geschoben wird. Das Rastelement kann jedoch auch im Bereich einer der zwei radialen Erweiterungen einen Biegebereich haben, wodurch sich das Rastelement nach der Art einer Klammer weitet.

Eine der zwei axialen Verlängerungen ist in radialer Richtung zwischen dem Spannkolben und einer der zwei radialen Erweiterungen des Rastelements angeordnet. Eine der zwei radialen Erweiterungen ist offen gestaltet, sodass die axiale Verlängerung nicht umschlossen wird. Bei insgesamt zwei radialen Erweiterungen und zwei axialen Verlängerungen ist somit genau eine der zwei axialen Verlängerungen in radialer Richtung zwischen dem Spannkolben und einer der zwei radialen Erweiterungen angeordnet. Die Gestaltung erleichtert auf vorteilhafte Weise die Montage des Rastelements.

In einer vorteilhaften Ausführung kann das Rastelement im Bereich der Einschnürung mit dem Gleitanschlag in Kontakt gebracht werden. Im Bereich der Unterbrechung des Rastelements stehen sich zwei Endabschnitte des Rastelements gegenüber, wobei Teilabschnitte der zwei Endabschnitte in Umfangsrichtung voneinander beabstandet sind, sich nach radial außen erstrecken und mit dem Gleitanschlag in Kontakt gebracht werden können. Trotz Unterbrechung des Rastelements kann somit eine Anlage am Gleitanschlag sichergestellt werden. Weitere radiale Erweiterungen des Rastelements, die keine Unterbrechung aufweisen, können entsprechend gestaltet sein.

In einer vorteilhaften Weiterentwicklung kann sich an den Bereich der Einschnürung ein Bereich der Aufweitung anschließen. Die Aufweitung kann V-förmig gestaltet sein. Die Gestaltung mit einer Aufweitung erleichtert auf vorteilhafte Weise die Montage des Rastelements.

In einer vorteilhaften Ausführungsform schließen zwei der zwei axialen Verlängerungen in Umfangsrichtung einen Rastabschnitt ein, wobei eine der zwei ringförmigen Abschnitte im Bereich dieses Rastabschnitts mit einer der Rastnuten in Eingriff gebracht werden kann; im Bereich der Rastabschnitte ist der Spannkolben nicht von der Aufnahme umgeben, sodass die Rastnuten von außen zugänglich sind. Das Rastelement kann somit in Umfangsrichtung zwischen den axialen Verlängerungen in die Rastnuten eingreifen. Die Funktionsweise der Rastierung kann somit in montiertem Zustand beobachtet werden, wodurch die Wartung des Verbrennungsmotors erleichtert wird. Darüber hinaus ist das Rastelement ein außenliegendes Bauteil der Spannvorrichtung; es ist also von außen zugänglich, wodurch eine Montage und Demontage des Rastelements vereinfacht wird. Darüber hinaus kann ein Sicherungselement einen der zwei ringförmigen Abschnitte im Bereich des Rastabschnitts mit einer der Rastnuten zwangsweise in Eingriff halten. Auf diese Weise kann eine Transportsicherung verwirklicht werden, weil eine Verlagerung des Rastelements in eine benachbarte Rastnut unterbunden wird.

In einer Weiterentwicklung weist das Rastelement zwei ringförmige Abschnitte und zwei radiale Erweiterungen auf, wobei die Aufnahme genau zwei axiale Verlängerungen aufweist, die genau zwei Rastabschnitte einschließen. Das Rastelement kann demnach mit zwei ringförmigen Abschnitten in eine der Rastnuten eingreifen, wodurch ein sicheres Klemmen ermöglicht wird. Darüber hinaus kann die geometrische Komplexität des Rastelements vermindert werden, da lediglich zwei axiale Verlängerungen vorgesehen sind; das Rastelement weist demnach zwei radiale Erweiterungen auf.

Eine mit Blick auf das Zurücksetzen vorteilhafte Ausführungsform betrifft eine Spannvorrichtung, die im Bereich des Rückhubs, also zwischen Gleitanschlagebene und Klemmanschlagebene, eine Rücksetzrampe aufweist, wobei die Rücksetzrampe eine sich nach radial innen erstreckende Erhebung der axialen Verlängerung der Aufnahme ist. Die Rücksetzrampe stellt sicher, dass ein Blockadeelement, wie beispielsweise ein Schraubendreher, parallel zur Gleitanschlagebene positioniert werden kann. Die Rücksetzrampe ist bevorzugt im Bereich des Klemmanschlags angeordnet und kann - eine Einführschräge bildend - in Richtung Gleitanschlag verlaufen. Die Rücksetzrampe ist bevorzugt an einer der zumindest zwei axialen Verlängerungen vorgesehen, die von einer radialen Erweiterung ohne Unterbrechung des Rastelements umgeben ist.

Alternativ zu einer Gestaltung mit Rücksetzrampe kann auch ein keilförmiges Spezialwerkzeug Einsatz finden, dass - nach Positionierung - mit einer seiner Kanten gegen die Aufnahme gedrückt wird; auf diese Weise kann das Rastelement in vergleichbarer Weise parallel zur Gleitanschlagebene positioniert und im Bereich des Gleitanschlags festgelegt werden.

Eine Gestaltung des Rastelements entsprechend einer der vorangehend beschriebenen Ausführungsformen erleichtert auf vorteilhafte Weise die Montage des Rastelements. Das Rastelement kann in einem ersten Schritt in einem axialen Bereich zwischen der Klemmanschlagebene und der Gleitanschlagebene in radiale Richtung über die erste der zwei axialen Verlängerungen geschoben werden. Anschließend wird das Rastelement über den Spannkolben sowie die zweite der zwei axialen Verlängerungen geschoben. Die Montage kann somit bei vormontiertem Spannkolben erfolgen bei zugleich geringer Komplexität.

Insbesondere bei Verwendung eines Rastelements in der zuvor beschriebenen Ausführung kann ein ausgefahrener Spannkolben derart zurückgesetzt werden, dass in einem ersten Schritt ein Blockadeelement in einem axialen Bereich zwischen der Klemmanschlagebene und der Gleitanschlagebene in tangentialer Richtung derart eingeführt wird, dass das Blockadeelement nach dem Einführen zwischen dem Rastelement und dem Klemmanschlag angeordnet ist. In einem zweiten Schritt wird der ausgefahrene Spannkolben in Richtung Aufnahme verlagert. Als Blockadeelement kann beispielsweise ein Schraubendreher, ein Nagel, ein Draht oder ein Bügel verwendet werden. Es ist von Vorteil, dass ein Spezialwerkzeug nicht zwingend erforderlich ist.

Nachdem das Blockadeelement eingeführt worden ist und der Spannkolben in Richtung Aufnahme verlagert wird, kann das Rastelement nicht mehr mit dem Klemmanschlag in Kontakt gebracht werden. Ein Formschluss zwischen Rastnut und Klemmanschlag wird verhindert, wodurch das Rastelement in benachbarte Rastnuten verlagert werden kann. Auf diese Weise kann der Spannkolben in die Aufnahme geschoben und mithilfe einer Transportsicherung fixiert werden.

Das Zurücksetzen des Spannkolbens erleichtert eine Demontage und eine anschließende Montage beispielsweise einer Komponente eines Verbrennungsmotors. Als alternatives Verfahren kommt eine Ausführung mit einem Rastelement in Betracht, das im Bereich der Unterbrechung Betätigungsabschnitte aufweist. Ein Zusammendrücken der Betätigungsabschnitte ermöglicht ein Aufweiten des Rastelements, wodurch ein Formschluss zwischen Rastnut, Rastelement und Klemmanschlag vermieden wird.

Die Erfindung wird im Folgenden anhand eines Ausführungsbeispiels erläutert:
- Fig. 1: zeigt einen Kettentrieb für einen Verbrennungsmotor mit seinen wesentlichen Komponenten;
- Fig. 2: zeigt ein Ausführungsbeispiel einer hydraulischen Spannvorrichtung;
- Fig. 3: zeigt einen Längsschnitt der hydraulischen Spannvorrichtung aus Fig. 2;
- Fig. 4: zeigt einen zweiten Längsschnitt der hydraulischen Spannvorrichtung aus Fig. 2;
- Fig. 5: zeigt eine Detailansicht der hydraulischen Spannvorrichtung aus Fig. 2;
- Fig. 6: zeigt die hydraulische Spannvorrichtung aus Fig. 2 mit einem Rastelement vor dessen Montage;
- Fig. 7: zeigt die hydraulische Spannvorrichtung aus Fig. 6 mit einem Rastelement während dessen Montage;
- Fig. 8: veranschaulicht das Zurücksetzen der hydraulischen Spannvorrichtung aus Fig. 2;
- Fig. 9: zeigt die hydraulische Spannvorrichtung aus Fig. 2 und Fig. 8 mit einer alternativ vorgesehenen Rücksetzrampe und
- Fig. 10: zeigt eine Ausführungsform des Rastelements.

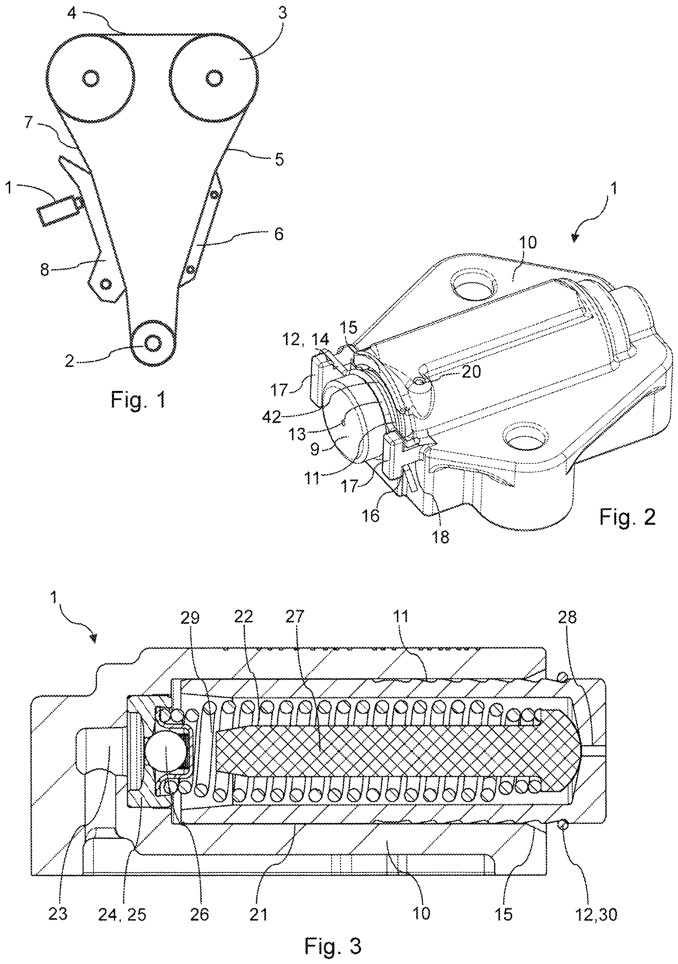

In Fig. 1 ist ein Kettentrieb mit einer hydraulischen Spannvorrichtung 1 für einen Verbrennungsmotor mit seinen wesentlichen Komponenten dargestellt. Ein Kettentrieb umfasst prinzipiell ein mit der Kurbelwelle verbundenes Antriebskettenrad 2, zwei mit jeweils einer Nockenwelle verbundene Abtriebskettenräder 3 sowie eine Steuerkette 4, die das Antriebskettenrad 2 mit den Abtriebskettenrädern 3 verbindet. Über das Zugtrum 5 der Steuerkette 4 wird ein Antriebsmoment der Kurbelwelle auf die Nockenwellen übertragen. Am Zugtrum 5 wird die Steuerkette 4 mittels einer Führungsschiene 6 geführt.

Die Steuerkette 4 wird an ihrem Leertrum 7 gespannt, um ihre Funktionalität über die Betriebsdauer gewährleisten zu können. Zu diesem Zweck wird die Steuerkette 4 mittels einer hydraulischen Spannvorrichtung 1 und eines Spannarms 8 mit einer Spannkraft beaufschlagt. Hydraulische Spannvorrichtungen 1 gemäß der beschriebenen Ausführungsform gewährleisten darüber hinaus eine Dämpfung des Kettentriebs.

In Fig. 2 ist eine hydraulische Spannvorrichtung 1 eines Kettentriebs gezeigt mit einem Spannkolben 9, der in einem zylindrischen Hohlraum einer Aufnahme 10 geführt ist und an seiner Außenumfangsfläche Rastnuten 11 aufweist. Weiterhin gezeigt ist ein Rastelement 12, das zwei ringförmige Abschnitte 13 und zwei radiale Erweiterungen 14 aufweist, wobei das Rastelement 12 mithilfe der zwei ringförmigen Abschnitte 13 mit einer der Rastnuten 11 in Eingriff steht. Ein Klemmanschlag 15 und ein Gleitanschlag 16 sind axial voneinander beabstandet angeordnet, wobei sich in axialer Richtung zwischen einer Klemmanschlagebene 32 und einer Gleitanschlagebene 33 (siehe Fig. 3) zwei axiale Verlängerungen 17 erstrecken. Die zwei axialen Verlängerungen 17 weisen in einem axialen Abschnitt zwischen der Klemmanschlagebene 32 und der Gleitanschlagebene 33 in Umfangsrichtung beidseitig eine Verjüngung 18 auf, wodurch in der Gleitanschlagebene 33 der Gleitanschlag 16 gebildet wird. Die zwei axialen Verlängerungen 17 schließen in Umfangsrichtung einen Rastabschnitt 42 ein, wobei die zwei ringförmigen Abschnitte 13 im Bereich des Rastabschnitts 42 mit einer der Rastnuten 11 in Eingriff gebracht werden kann.

Die zwei axialen Verlängerungen 17 und der Spannkolben 9 schließen die zwei radialen Erweiterungen 14 des Rastelements 12 nicht ein.

Fig. 3 zeigt einen Längsschnitt durch die hydraulische Spannvorrichtung 1. Dargestellt ist die Aufnahme 10 mit dem zylindrischen Hohlraum 21, in dem der Spannkolben 9 geführt ist. Spannkolben 9 und Innenmantelfläche des zylindrischen Hohlraums 21 schließen einen Hochdruckraum 22 ein, der über eine Zulaufleitung 23 und ein Rückschlagventil 24, das einen Ventilsitz 25 und einen kugelförmigen Schließkörper 26 aufweist, mit Hydraulikmittel versorgt wird. Im Hochdruckraum 22 ist ein Element zur Verminderung des Füllvolumens 27 angeordnet, das endseitig eine Entlüftungsöffnung 28 bedeckt. Alternativ kann jedoch auch ein - nicht gezeigtes - Überdruckventil in dem Spannkolben 9 eingesetzt sein. Der Spannkolben 9 ist mittels einer Feder 29 in Ausfahrrichtung und somit nach Montage gegen die Spannschiene 8 vorgespannt.

Der Spannkolben 9 weist am Außenumfang Rastnuten 11 auf, wobei das Rastelement 12 in die äußerste Rastnut 30 eingreift. Die Rastnuten 11 sind umlaufend entlang des Außenumfangs angeordnet und derart gestaltet, dass ein Ausfahren des Spannkolbens 9 ermöglicht, ein Einfahren des Spannkolbens 9 jedoch verhindert wird: Die Rastnuten 11 weisen jeweils zwei Nutwände auf, die mithilfe des Rastelements 12 einerseits mit dem Klemmanschlag 15 und andererseits mit dem Gleitanschlag 16 in Kontakt gebracht werden können. Die Nutwand, die bei einem Einfahren mit dem Klemmanschlag 15 in Kontakt gebracht werden kann, verläuft steiler als die gegenüberliegende Nutwand, die mit dem Gleitanschlag in Kontakt gebracht werden kann. Ein übermäßiges Einfahren wird auf diese Weise wirksam unterbunden, weil das Rastelement 12 formschlüssig zwischen Rastnut 30 und Klemmanschlag 15 anliegt. Bei einem Ausfahren des Spannkolbens 9 kann das Rastelement 12 mit dem Gleitanschlag 16 in Kontakt gebracht werden, wodurch das Rastelement 12 über die Nutwand in die nächste Rastnut 30 gleitet bzw. zwangsweise geschoben werden kann. In der Aufnahme 10 ist ein Durchgang 41 für einen Sicherungsdraht vorgesehen, der tangential in eine der Rastnuten 11 eingreift.

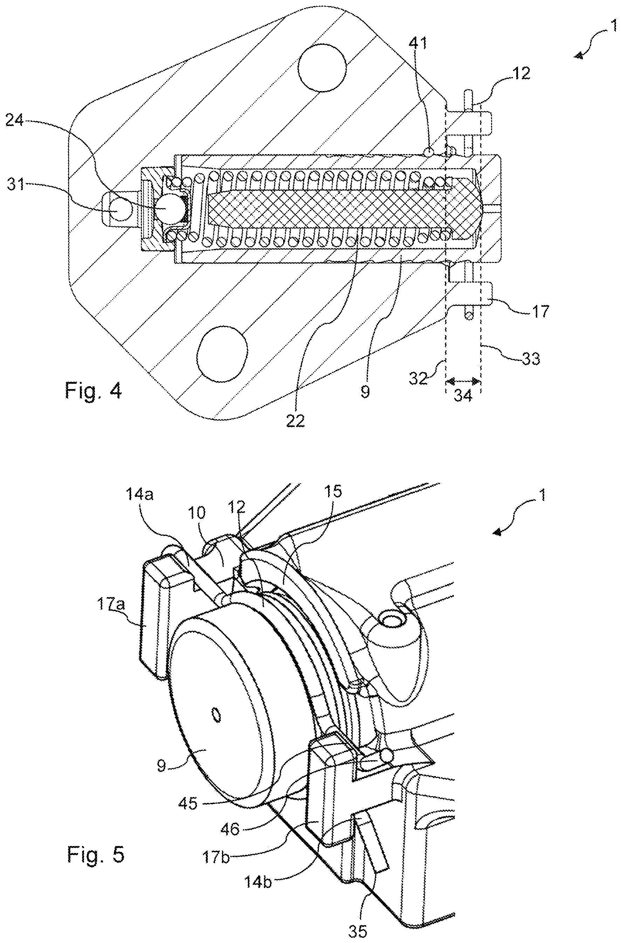

Die axialen Verlängerungen 17, aus denen der Gleitanschlag 16 hervorgeht, sind in Fig. 4 dargestellt. Das Rastelement 12 ist in Eingriff mit der äußersten Rastnut 30 und befindet sich in einem axialen Abschnitt zwischen der Klemmanschlagebene 32 und der Gleitanschlagebene 33. Der axiale Abstand zwischen der Klemmanschlagebene 32 und der Gleitanschlagebene 33 bestimmt den Rückhub 34 des Spannkolbens 9. Des Weiteren dargestellt ist eine Zulaufbohrung 31, die den Hochdruckraum 22 über das Rückschlagventil 24 mit Hydraulikmittel versorgt.

Eine Detailansicht der hydraulischen Spannvorrichtung 1 ist in Fig. 5 dargestellt. Der Spannkolben 9 ist in dem zylindrischen Hohlraum der als Gehäuse gestalteten Aufnahme 10 eingesetzt, wobei das Rastelement 12 auf dem Spannkolben 9 sitzt. Das Rastelement 12 umfasst zwei ringförmige Abschnitte 13, die in eine Rastnut 11 des Spannkolbens 9 eingreifen. Eine erste radiale Erweiterung 14a des Rastelements 12 schließt mit dem Spannkolben 9 die erste axiale Verlängerung 17a ein. Eine zweite radiale Erweiterung 14b schließt mit dem Spannkolben 9 die zweite axiale Verlängerung 17b ein. Die zweite radiale Erweiterung 14b weist eine Einschnürung 45 und eine Unterbrechung 35 des Rastelements 12 auf. An den Bereich der Einschnürung 45 schließt sich ein Bereich der Aufweitung 46 an. Die Aufweitung 46 kann V-förmig gestaltet sein. Die Gestaltung mit einer Aufweitung 46 erleichtert auf vorteilhafte Weise die Montage des Rastelements 12.

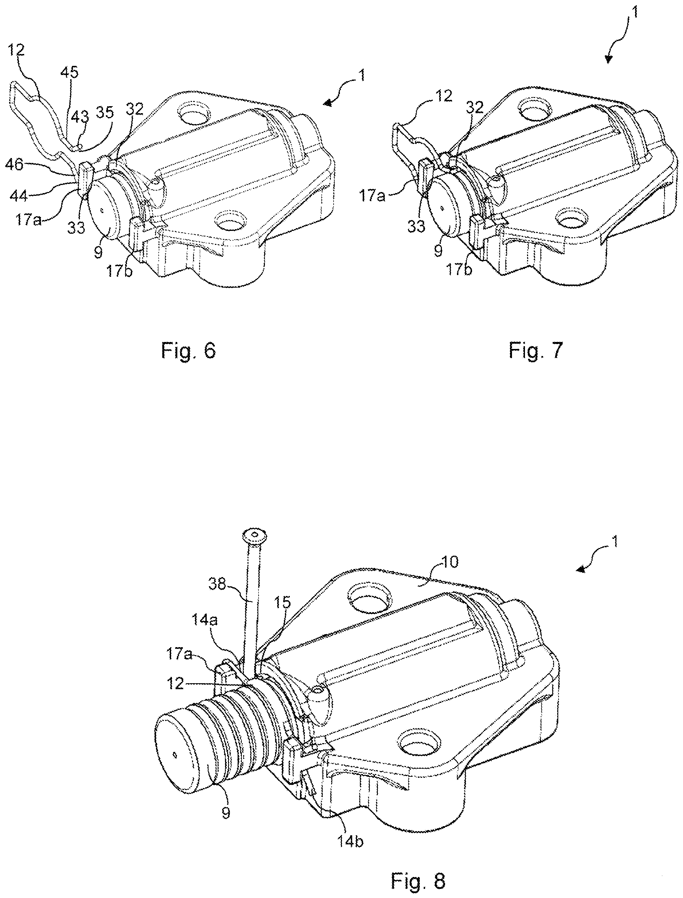

Die weitere Gestaltung des Rastrings 12 mit Einschnürung 45 und Aufweitung 46 veranschaulicht Fig. 6. Im Bereich der Unterbrechung 35 des Rastelements 12 stehen sich ein erstes Ende 43 und ein zweites Ende 44 des Rastelements 12 gegenüber, wobei das erste Ende 43 und das zweite Ende 44 des Rastelements 12 die Unterbrechung 35 einschließen. Zumindest in einem nicht vorgespannten Zustand des Rastelements 12 ist in Umfangsrichtung der Abstand zwischen dem ersten Ende 43 und dem zweiten Ende 44 größer als zwischen Teilbereichen des Rastelements, die die Einschnürung 45 bilden.

Die Montage der Spannvorrichtung 1 kann - wie veranschaulicht in Fig. 6 und Fig. 7 - derart erfolgen, dass das Rastelement 12 in einem axialen Bereich zwischen der Klemmanschlagebene 32 und der Gleitanschlagebene 33 in radiale Richtung über die erste der zwei axialen Verlängerungen 17a geschoben wird und anschließend über den Spannkolben 9 sowie die zweite der zwei axialen Verlängerungen 17b.

Ein Verfahren zum Zurücksetzen des Spannkolbens 9 der hydraulischen Spannvorrichtung 1 ist in Fig. 8 veranschaulicht. Das Zurücksetzen kann demnach dadurch erfolgen, dass in einem ersten Schritt ein als Nagel 38 gestaltetes Blockadeelement in einem axialen Bereich zwischen der Klemmanschlagebene 32 und der Gleitanschlagebene 33 in radiale Richtung (tangential zu einem um die Längsachse gezogenen Kreis) derart eingeführt wird, dass der Nagel nach dem Einführen zwischen dem Rastelement 12 und dem Klemmanschlag 15 sowie zwischen dem Spannkolben 9 und einer der axialen Verlängerungen 17 angeordnet ist. Anschließend kann in einem zweiten Schritt der ausgefahrene Spannkolben 9 in Richtung Aufnahme 10 verlagert und gesichert werden, weil das Rastelement 12 nicht in formschlüssigen Kontakt mit dem Klemmanschlag 15 gebracht werden kann. Als Alternative zu einem Nagel 38 kann beispielsweise ein Bügel Verwendung finden.

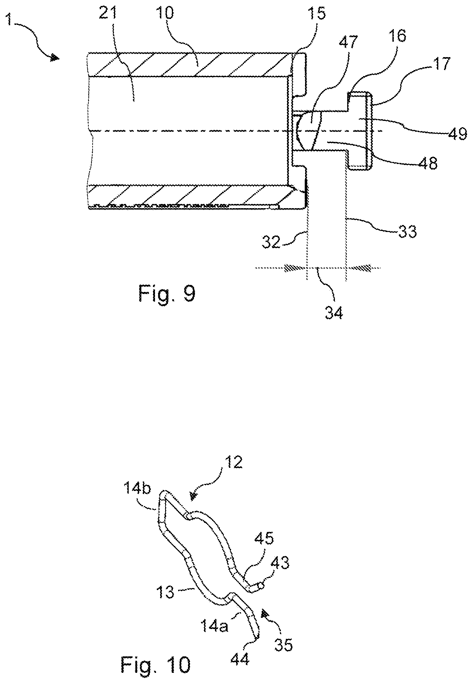

Fig. 9 zeigt die hydraulische Spannvorrichtung 1 aus Fig. 2 mit einer alternativ vorgesehenen Rücksetzrampe 47. Dargestellt ist die Aufnahme 10 mit dem zylindrischen Hohlraum 21, an deren Öffnung der Klemmanschlag 15 gebildet ist. Die axiale Verlängerung 17 erstreckt sich in axialer Richtung von der Aufnahme 10 weg und endet mit dem Gleitanschlag 16. Die axiale Lage der Klemmanschlagebene 32 und der Gleitanschlagebene 33 nehmen wesentlichen Einfluss auf den maximal möglichen Rückhub 34 eines (nicht dargestellten) Spannkolbens, bevor das Rastelement in eine benachbarte Rastnut 11 überführt wird. Im Bereich des Rückhubs 34 ist die Rücksetzrampe 47 angeordnet. Die Rücksetzrampe 47 ist eine sich nach radial innen erstreckende Erhebung des Stegs 48 der T-förmig gestalteten axialen Verlängerung 17. Die T-förmig gestaltete axiale Verlängerung 17 schließt mit einem Dach 49 ab.

In einem ersten Schritt kann somit ein nicht dargestelltes Blockadeelement, wie beispielswiese ein Schraubendreher (siehe auch Fig. 8, Bezugszeichen 38), in einem axialen Bereich zwischen der Klemmanschlagebene 32 und der Gleitanschlagebene 33 in tangentialer Richtung zum zylindrischen Hohlraum 21 (bzw. in tangentialer Richtung zu einem nicht dargestellten Spannkolben) derart eingeführt werden, dass das Blockadeelement nach dem Einführen zwischen einem nicht dargestellten Rastelement (siehe etwa Fig. 1 bis 7, Bezugszeichen 12) und dem Klemmanschlag 15 angeordnet ist. Die Rücksetzrampe ist daher an einer der zumindest zwei axialen Verlängerungen 17 vorgesehen, die von einer radialen Erweiterung 14 ohne Unterbrechung 35 des Rastelements 12 umgeben ist (siehe beispielsweise Fig. 5, axiale Verlängerung 17a). Die Rücksetzrampe 47 stellt sicher, dass das Blockadeelement parallel zur Gleitanschlagebene 33 positioniert wird. Darüber hinaus kann das Rastelement 12 zwischen Blockadeelement und Gleitanschlag 16 in axialer Richtung festgelegt werden. In einem zweiten Schritt kann der nicht dargestellte, ausgefahrene Spannkolben 9 in Richtung Aufnahme 10 verlagert und anschließend mit einem Transportsicherungsdraht festgelegt werden.

Eine beispielhafte Ausführungsform des Rastelements 12 ist in Fig. 10 dargestellt. Gezeigt sind eine erste und eine zweite radiale Erweiterung 14a und 14b und zwei ringförmige Abschnitte 13. Die erste radiale Erweiterung 14a umfasst eine Einschnürung 45 und zwei Enden 43, 44. Die zwei Enden 43, 44 schließen eine Unterbrechung des Rastelements 12 ein. Im Bereich der Unterbrechung 35 befindet sich eine Aufweitung, so dass der Abstand zwischen dem erste Ende 43 und dem zweiten Ende 44 größer ist als im Bereich der Einschnürung 45. Die geometrische Gestaltung erleichtert ein Aufschieben des Rastelements 12 in radialer Richtung.

### Bezugszeichenliste

- 1: hydraulische Spannvorrichtung
- 2: Antriebskettenrad
- 3: Abtriebskettenrad
- 4: Steuerkette
- 5: Zugtrum
- 6: Führungsschiene
- 7: Leertrum
- 8: Spannarm
- 9: Spannkolben
- 10: Aufnahme
- 11: Rastnut
- 12: Rastelement
- 13: ringförmiger Abschnitt
- 14: radiale Erweiterung
- 14a: erste radiale Erweiterung
- 14b: zweite radiale Erweiterung
- 15: Klemmanschlag
- 16: Gleitanschlag
- 17: axiale Verlängerung
- 17a: erste axiale Verlängerung
- 17b: zweite axiale Verlängerung
- 18: Verjüngung
- 20: Öffnung
- 21: zylindrischer Hohlraum
- 22: Hochdruckraum
- 23: Zulaufleitung
- 24: Rückschlagventil
- 25: Ventilsitz
- 26: kugelförmiger Schließkörper
- 27: Element zur Verminderung des Füllvolumens
- 28: Entlüftungsöffnung
- 29: Feder
- 30: äußerste Rastnut
- 31: Zulaufbohrung
- 32: Klemmanschlagebene
- 33: Gleitanschlagebene
- 34: Rückhub
- 35: Unterbrechung
- 38: Nagel
- 41: Durchgang
- 42: Rastabschnitt
- 43: erstes Ende
- 44: zweites Ende
- 45: Einschnürung
- 46: Aufweitung
- 47: Rücksetzrampe
- 48: Steg
- 49: Dach

## Patentansprüche

1. Hydraulische Spannvorrichtung (1) für einen Kettentrieb mit einem Spannkolben (9), der in einer Aufnahme (10) geführt ist und der an seiner Außenumfangsfläche Rastnuten (11) aufweist, und mit einem Rastelement (12), das zwei ringförmige Abschnitte (13) und zwei radiale Erweiterungen (14) aufweist, wobei das Rastelement (12) mithilfe der zwei ringförmigen Abschnitte (13) mit einer der Rastnuten (11) in Eingriff gebracht werden kann, sowie mit einem Klemmanschlag (15) und einem Gleitanschlag (16), die axial voneinander beabstandet sind, wobei eine der zwei radialen Erweiterungen (14) eine Einschnürung (45) und eine Unterbrechung (35) des Rastelements (12) aufweist, wobei ein erstes Ende (43) und ein zweites Ende (44) des Rastelements (12) die Unterbrechung (35) einschließen, wobei in Umfangsrichtung der Abstand zwischen dem ersten Ende (43) und dem zweiten Ende (44) größer ist als zwischen Teilbereichen des Rastelements (12), die die Einschnürung (45) bilden, und **dadurch gekennzeichnet, dass** die Aufnahme (10) zwei axiale Verlängerungen (17) aufweist, die sich in axialer Richtung zwischen der Klemmanschlagebene (32) und der Gleitanschlagebene (33) erstrecken und die im Bereich der Gleitanschlagebene voneinander getrennt angeordnet sind, und dass die zwei axialen Verlängerungen (17) in einem axialen Abschnitt zwischen der Klemmanschlagebene (32) und der Gleitanschlagebene (33) in Umfangsrichtung beidseitig eine Verjüngung (18) aufweisen, wodurch in der Gleitanschlagebene (33) der Gleitanschlag (16) gebildet wird.

2. Hydraulische Spannvorrichtung nach Anspruch 1, **dadurch gekennzeichnet, dass** das Rastelement (12) im Bereich der Einschnürung (45) mit dem Gleitanschlag (16) in Kontakt gebracht werden kann.

3. Hydraulische Spannvorrichtung nach Anspruch 1 oder 2, **dadurch gekennzeichnet, dass** sich an den Bereich der Einschnürung (45) des Rastelements (12) ein Bereich der Aufweitung (46) anschließt.

4. Hydraulische Spannvorrichtung nach einem der vorangehenden Ansprüche, **dadurch gekennzeichnet, dass** die zwei axialen Verlängerungen (17) in Umfangsrichtung einen Rastabschnitt (42) einschließen, wobei ein der zwei ringförmigen Abschnitte (13) im Bereich des Rastabschnitts (42) mit einer der Rastnuten (11) in Eingriff gebracht werden kann.

5. Hydraulische Spannvorrichtung nach Anspruch 4, **dadurch gekennzeichnet, dass** das Rastelement (12) genau zwei ringförmige Abschnitte (13) und genau zwei radiale Erweiterungen (14) aufweist und dass die Aufnahme (10) genau zwei axiale Verlängerungen (17) aufweist, die in Umfangsrichtung genau zwei Rastabschnitte (42) einschließen.

6. Verfahren zur Montage einer hydraulischen Spannvorrichtung (1) nach einem der vorangehenden Ansprüche, **dadurch gekennzeichnet, dass** das Rastelement (12) in einem axialen Bereich zwischen der Klemmanschlagebene (32) und der Gleitanschlagebene (33) in radiale Richtung über eine erste der zwei axialen Verlängerungen (17a) geschoben wird und anschließend über den Spannkolben (9) sowie die zweite der zwei axialen Verlängerungen (17b).

7. Verfahren zum Zurücksetzen des Spannkolbens (9) einer hydraulischen Spannvorrichtung (1) nach einem der Ansprüche 1 bis 6, **dadurch gekennzeichnet, dass**
- in einem ersten Schritt ein Blockadeelement (38) in einem axialen Bereich zwischen der Klemmanschlagebene (32) und der Gleitanschlagebene (33) in tangentialer Richtung derart eingeführt wird, dass das Blockadeelement (38) nach dem Einführen zwischen dem Rastelement (12) und dem Klemmanschlag (15) angeordnet ist;
- in einem zweiten Schritt der ausgefahrene Spannkolben (9) in Richtung Aufnahme (10) verlagert wird.

## Claims

1. A hydraulic tensioning device (1) for a chain drive, comprising a tensioning piston (9), which is guided in a receptacle (10) and which has detent grooves (11) on the outer circumferential surface thereof, and comprising a detent element (12), which has two annular sections (13) and two radial extensions (14), wherein the detent element (12) can be brought into engagement with one of the detent grooves (11) by means of the two annular sections (13), as well as comprising a clamping stop (15) and a slide stop (16), which are axially spaced apart from each other, wherein one of the two radial extensions (14) has a constriction (45) and an interruption (35) of the detent element (12), wherein a first end (43) and a second end (44) of the detent element (12) enclose the interruption (35), wherein in the circumferential direction the distance between the first end (43) and the second end (44) is greater than between portions of the detent element (12) which form the constriction (45), and **characterised in that** the receptacle (10) has two axial elongations (17), which extend in the axial direction between the clamping stop plane (32) and the slide stop plane (33) and which are arranged separately from each other in the region of the slide stop plane, and **in that** the two axial elongations (17) have a taper (18) on both sides in the circumferential direction in an axial section between the clamping stop plane (32) and the slide stop plane (33), as a result of which the slide stop (16) is formed in the slide stop plane (33).

2. The hydraulic tensioning device according to claim 1, **characterised in that** the detent element (12) can be brought into contact with the slide stop (16) in the region of the constriction (45).

3. The hydraulic tensioning device according to claim 1 or 2, **characterised in that** a region of the widening (46) adjoins the region of the constriction (45) of the detent element (12).

4. The hydraulic tensioning device according to one of the preceding claims, **characterised in that** the two axial elongations (17) in the circumferential direction enclose a detent section (42), wherein one of the two annular sections (13) in the region of the detent section (42) can be brought into engagement with one of the detent grooves (11).

5. The hydraulic tensioning device according to claim 4, **characterised in that** the detent element (12) has exactly two annular sections (13) and exactly two radial extensions (14) and **in that** the receptacle (10) has exactly two axial elongations (17), which enclose exactly two detent sections (42) in the circumferential direction.

6. A method for mounting a hydraulic tensioning device (1) according to one of the preceding claims, **characterised in that**, in an axial region between the clamping stop plane (32) and the slide stop plane (33), the detent element (12) is pushed in the radial direction over a first of the two axial elongations (17a) and then over the tensioning piston (9) and the second of the two axial elongations (17b).

7. A method for resetting the tensioning piston (9) of a hydraulic tensioning device (1) according to one of claims 1 to 6, **characterised in that**
- in a first step, a blocking element (38) is inserted in an axial region between the clamping stop plane (32) and the slide stop plane (33) in the tangential direction such that, after insertion, the blocking element (38) is arranged between the detent element (12) and the clamping stop (15);
- in a second step, the extended tensioning piston (9) is moved in the direction of receptacle (10).

## Revendications

1. Dispositif de tension hydraulique (1) pour un entraînement par chaîne comprenant un piston de serrage (9)l qui est guidé dans un logement (10) et qui présente des gorges de verrouillage (11) sur sa surface périphérique externe et un élément de verrouillage (12) qui présente deux sections annulaires (13) et deux élargissements radiaux (14), l'élément de verrouillage (12) pouvant être amené en prise avec l'une des gorges de verrouillage (11) au moyen des deux sections annulaires (13), ainsi qu'une butée de serrage (15) et une butée coulissante (16), espacées axialement l'une de l'autre, l'un des deux élargissements radiaux (14) présentant un étranglement (45) et une interruption (35) de l'élément de verrouillage (12), une première extrémité (43) et une seconde extrémité (44) de l'élément de verrouillage (12) comprenant l'interruption (35), dans le sens circonférentiel, la distance entre la première extrémité (43) et la seconde extrémité (44) étant supérieure à celle séparant les parties de l'élément de verrouillage (12) formant l'étranglement (45) et **caractérisé en ce que** le logement (10) comporte deux prolongements axiaux (17) qui s'étendent dans la direction axiale entre le plan de butée de serrage (32) et le plan de butée coulissante (33) et qui sont disposés séparément dans le plan de butée coulissante et **en ce que** les deux prolongements axiaux (17) présentent des deux côtés un rétrécissement (18), dans une section axiale entre le.plan de butée de serrage (32) et le plan de butée coulissante (33),dans la direction circonférentielle, formant ainsi la butée coulissante (16) dans le plan de butée coulissante (33).

2. Dispositif de tension hydraulique selon la revendication 1, **caractérisé en ce que** l'élément de verrouillage (12) peut être amené au contact avec la butée coulissante (16) dans la zone de l'étranglement (45).

3. Dispositif de tension hydraulique selon la revendication 1 ou 2, **caractérisé en ce qu'**une zone de l'élargissement (46) est adjacente à la zone de l'étranglement (45) de l'élément de verrouillage (12).

4. Dispositif de tension hydraulique selon l'une quelconque des revendications précédentes, **caractérisé en ce que** les deux prolongements axiaux (17) dans la direction circonférentielle comprennent une section de verrouillage (42), l'une des deux sections annulaires (13) dans la zone de la section de verrouillage (42) pouvant être amenée en prise avec l'une des gorges de verrouillage (11).

5. Dispositif de tension hydraulique selon la revendication 4, **caractérisé en ce que** l'élément de verrouillage (12) présente exactement deux sections annulaires (13) et exactement deux élargissements radiaux (14) et **en ce que** le logement (10) présente exactement deux prolongements axiaux (17) qui comprennent exactement deux sections de verrouillage (42) dans la direction circonférentielle.

6. Procédé de montage d'un dispositif de tension hydraulique (1) selon l'une quelconque des revendications précédentes, **caractérisé en ce que** l'élément de verrouillage (12) est poussé, dans une zone axiale entre le plan de butée de serrage (32) et le plan de butée coulissante (33) dans la direction radiale, sur un premier des deux prolongements axiaux (17a) et ensuite sur le piston de serrage (9) et le second des deux prolongements axiaux (17b).

7. Procédé de réarmement du piston de serrage (9) d'un dispositif de tension hydraulique (1) selon l'une quelconque des revendications 1 à 6, **caractérisé en ce que**
- dans une première étape, un élément de blocage (38) est inséré dans une zone axiale entre le plan de butée de serrage (32) et le plan de butée coulissante (33) dans la direction tangentielle, de manière à agencer l'élément de blocage (38), après insertion, entre l'élément de verrouillage (12) et la butée de serrage (15) ;
- dans une seconde étape, le piston de serrage (9) déployé est déplacé dans le sens du logement (10).
